# EUROPÄISCHE PATENTSCHRIFT

(11) **EP 1 080 975 B1**
(45) Veröffentlichungstag und Bekanntmachung des Hinweises auf die Patenterteilung: **09.08.2006**
(21) Anmeldenummer: 00117237.8
(22) Anmeldetag: 14.08.2000
(51) Int. Cl.: G07C 5/08, B60K 35/00

(54) **Verfahren und Vorrichtung zur Darstellung von fahrer- oder fahrtrelevanten Informationen**
Method and device for displaying driver and trip relevant information
Procédure et dispositif pour afficher des informations importantes pour le conducteur et pour le voyage

(30) Priorität: 16.03.2000 DE 10012952; 03.09.1999 DE 19941965
(43) Veröffentlichungstag der Anmeldung: 07.03.2001
(73) Patentinhaber: Volkswagen Aktiengesellschaft, 38436 Wolfsburg (DE)
(72) Erfinder: Lilienthal, Jörg, 38518 Gifhorn (DE); Heimermann, Matthias, 38302 Wolfenbüttel (DE)

(56) Entgegenhaltungen:
- EP-A- 0 494 606
- EP-A- 0 841 541
- DE-A- 3 936 373
- FR-A- 2 510 783
- US-A- 4 787 039
- US-A- 5 459 666

## Beschreibung

Die Erfindung betrifft ein Verfahren und eine Vorrichtung zur Darstellung von fahrer- oder fahrtrelevanten Informationen. EP 0494606A1 zeigt ein Navigationsgerät mit den Merkmalen des Oberbegriffs des Anspruchs 1.

Zur Sicherstellung der Funktionalität eines Kraftfahrzeuges muß der Kraftfahrzeugführer Verschleiß unterworfene Komponenten beobachten und rechtzeitig auswechseln bzw. ergänzen. Hierzu gehören beispielsweise die Bremsscheiben oder die Motorölflüssigkeit. Neben diesen fahrerrelevanten Informationen besteht häufig der Wunsch, Überblicksdaten über eine Reiseroute zu erhalten, die gegenwärtig vom Kraftfahrzeugführer befahren wird. Beispielsweise möchte der Kraftfahrzeugführer wissen, wie lange voraussichtlich die Fahrt dauert, um eine notwendige Ruhepause abzuschätzen. Die bisher verwendeten Anzeigen erschöpfen sich meist in einer binären Aussage, nämlich ob die Komponente noch funktionsfähig ist oder nicht, oder geben nur eine alphanumerischen Wert aus, der häufig sehr abstrakt ist und keine unmittelbare Aussagekraft für den Kraftfahrzeugführer besitzt.

Der Erfindung liegt daher das technische Problem zugrunde, ein Verfahren und eine Vorrichtung zur Darstellung von fahrer- oder fahrtrelevanten Informationen zu schaffen, mittels denen der Kraftfahrzeugführer übersichtlicher und umfassender informiert wird.

Die Lösung des technischen Problems ergibt sich durch die Gegenstände mit den Merkmalen der Patentansprüche 1 und 16. Weitere vorteilhafte Ausgestaltungen ergeben sich aus den Unteransprüchen.

Dabei wird zunächst eine Gesamtlebensdauer einer Komponente oder der Gesamtinhalt einer Betriebsflüssigkeit oder die Gesamtzeit eines Serviceintervalls oder die Gesamtlänge einer Route als Bezugsgröße durch ein grafisches Element bestimmter Länge dargestellt, dessen Gesamtlänge 100% der darzustellenden Größe darstellt. Die Bezugsgrößen sind dabei entweder als Herstellerangaben in einem Steuergerät abgelegt (z.B. maximaler Kraftstoffinhalt) oder werden ermittelt. So wird beispielsweise empfohlen eine Inspektion nach einer bestimmten Kilometerleistung oder nach einer bestimmten Zeit durchzuführen, je nachdem welche Bedingung zuerst erfüllt wird. Anschließend wird der jeweilige Istwert ermittelt, also wieviel Zeit bereits verstrichen ist oder wieviel Betriebsflüssigkeit tatsächlich enthalten ist. Dieser Istwert wird durch ein zweites grafisches Element symbolisiert, der entsprechend seiner prozentualen Größe bezogen auf die Bezugsgröße an der entsprechenden Stelle des ersten grafischen Elementes dargestellt wird. Dadurch erhält der Kraftfahrzeugführer unmittelbar einen optischen Eindruck über den Istzustand, so daß eine verbleibende Restgröße besser eingeschätzt werden kann.

In einer bevorzugten Ausführungsform werden Reisedaten für den Kraftfahrzeugführer aufbereitet, wozu auf die Daten eines Navigationssystems zurückgegriffen wird. Zunächst wird die Gesamtlänge der berechneten Fahrtroute zwischen Standort und Zielort ermittelt, die dann die Bezugsgröße 100% darstellt. Mittels der Positionserfassungseinrichtung des Navigationssystems wird dann die jeweilige IstPosition ermittelt und mittels eines zweiten grafischen Elementes an der betreffenden Stelle am ersten grafischen Element angeordnet.

Vorzugsweise ist das erste grafische Element als Linie ausgebildet. Das zweite grafische Element ist vorzugsweise als pfeilartiger Zeiger ausgebildet, in dem zusätzlich alphanumerische Daten dargestellt werden.

In einer weiteren bevorzugten Ausführungsform wird neben dem ersten grafischen Element ein balkenförmiges Element vom Istwert zum Start- bzw. Zielpunkt angeordnet, je nachdem, ob die Darstellung start- oder zielorientiert ist. Vorzugsweise wird neben der bereits zurückgelegten bzw. noch verbleibenden Fahrtstrecke auch die zugehörige Reisezeit dargestellt, die dann durch analoge grafische Elemente wie die Fahrtstrecke angezeigt werden kann. Die Fahrtzeit wird dabei entweder aus der durchschnittlichen Fahrtgeschwindigkeit oder mittels a-priori-Informationen abgeschätzt. An dem ersten grafischen Element für die Fahrtstrecke können zusätzliche Informationen wie Tankreichweite, Verkehrsinformationen oder vorgeschriebene Ruhepausen dargestellt werden.

Die Erfindung wird nachfolgend anhand eines bevorzugten Ausführungsbeispieles näher erläutert. Die Fig. zeigen:
Fig.1 eine Darstellung von startbezogenen Reisedaten,
Fig.2 eine Darstellung von zielbezogenen Reisedaten.
Fig. 3 eine alternative Darstellung von startbezogenen Reisedaten
Fig. 4 eine Darstellung von Tankdaten und
Fig. 5 eine Darstellung von Langzeitstatistik-Daten.

Die Darstellung von startbezogenen Reisedaten umfaßt ein erstes grafisches Element 1 für die Fahrzeit und ein erstes grafisches Element 2 für die Fahrstrecke. Die Länge der ersten grafischen Elemente 1, 2 entspricht dabei 100% der Reisezeit bzw. der Reisestrecke. Im dargestellten Beispiel ist der Kraftfahrzeugführer um 14:00 losgefahren, wobei die zum Zielort berechnete Streckenlänge 631 km beträgt. Bei einer erfaßten mittleren Durchschnittsgeschwindigkeit von 140 km/h, die in einem Feld 3 alphanumerisch dargestellt ist, ergibt sich eine Gesamtfahrzeit von 4 Stunden und 30 Minuten, also eine voraussichtliche Ankunftszeit von 18:30. Die bereits zurückgelegte Fahrtzeit bzw. Fahrtstrecke wird durch pfeilartige Zeiger 4, 5 an den entsprechenden Positionen an den grafischen Elementen 1, 2 gekennzeichnet. Des weiteren sind neben den grafischen Elemente 1, 2 balkenförmige Elemente 6, 7 angeordnet, die sich vom Startpunkt bis zum Istwert am pfeilartigen Zeiger 4, 5 erstrecken. In den pfeilartigen Zeigern 4, 5 ist der jeweilige Istwert alphanumerisch dargestellt. Im dargestellten Beispiel ist die bisherige Fahrtzeit 2 Stunden und 6 Minuten, wobei 294 km zurückgelegt wurden. Mit zunehmender Fahrtzeit bzw. Fahrtstrecke wandern die Zeiger 4, 5 und die balkenförmigen Elemente 6, 7 auf der Anzeige nach oben. Mittels eines Bedienfeldes "Zurücksetzen" kann der Kraftfahrzeugführer einen neuen Startpunkt festlegen.

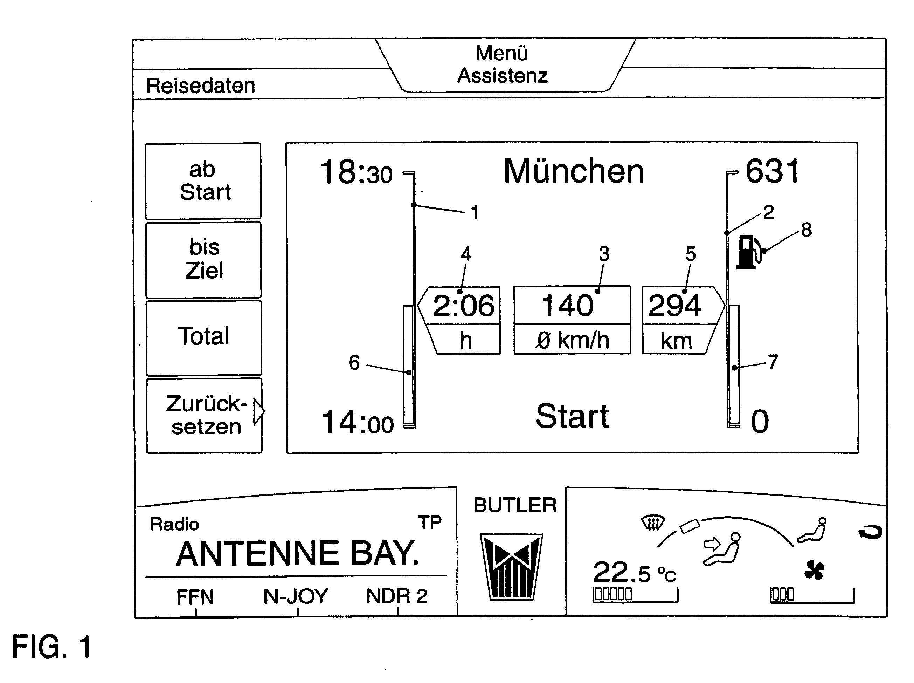

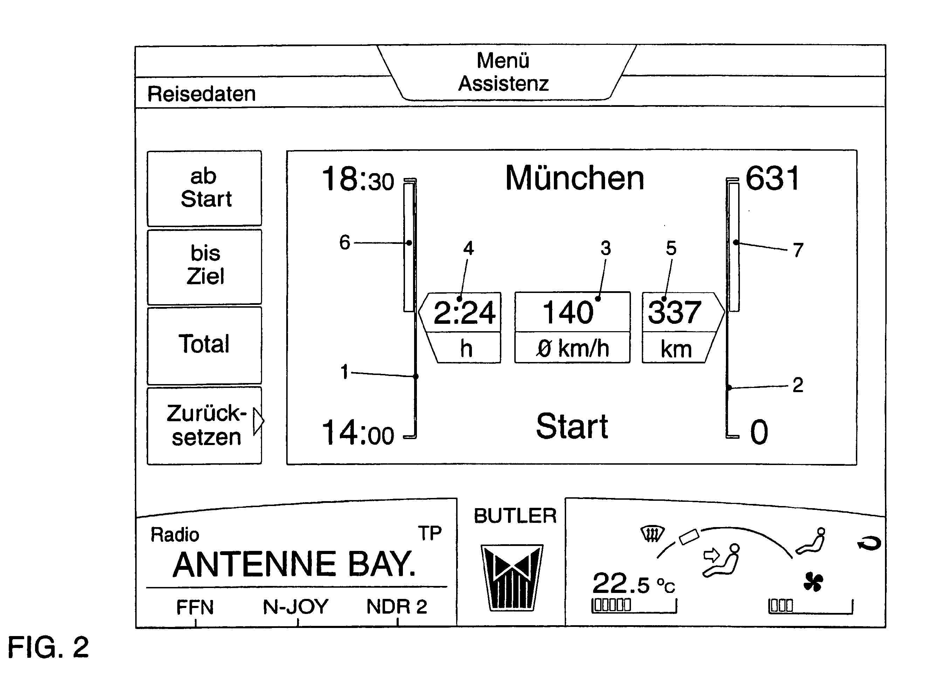

In der Fig. 2 sind die Reisedaten aus Fig.1 zielbezogen dargestellt. Die pfeilartigen Zeiger 4, 5 sind dabei wieder an den entsprechenden Stellen für die Istposition angeordnet, wobei nunmehr alphanumerisch die verbleibende Fahrtzeit von 2 Stunden und 24 Minuten bzw. die verbleibende Fahrtstrecke von 337 km dargestellt sind. Dabei ist anzumerken, daß sich die abgeschätzte Fahrtzeit ändert, falls sich die Durchschnittsgeschwindigkeit ändert.

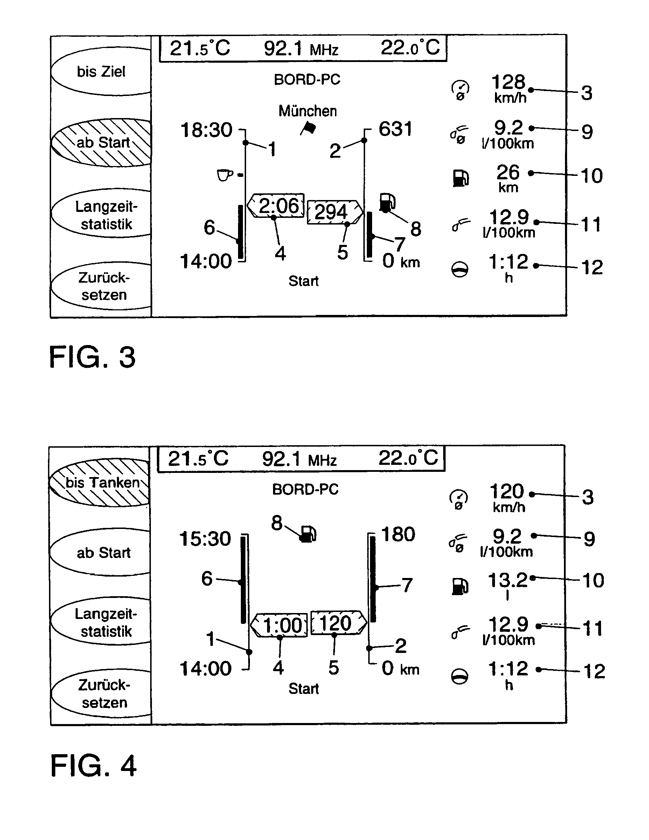

In der Fig. 3 ist eine erweiterte Darstellung gemäß Fig. 1 gezeigt. In Abweichung zu Fig. 1 ist das Feld 3 mit der mittleren Durchschnittsgeschwindigkeit nicht zwischen den pfeilartigen Zeigern 4, 5, sondern am rechten Rand der Anzeigeeinheit dargestellt. Unter dem Feld 3 für die Durchschnittsgeschwindigkeit ist ein Feld 9 mit dem mittleren Kraftstoffverbrauch angeordnet. Unter dem Feld 9 ist ein Feld 10 angeordnet, in dem die verbleibende Tankreichweite dargestellt ist. Das Feld 10 beinhaltet somit die numerische Information des Piktogramms 8. Weiter ist unter dem Feld 10 ein Feld 11 mit dem Momentanverbrauch und ein Feld 12 mit der Lenkzeit des Kraftfahrzeugführers seit der letzten Rast dargestellt. Aufgrund der seitlichen Anordnung der Felder 3, 9 - 12 wird die Übersichtlichkeit der mittleren Grafik erhöht.

In der Fig. 4 ist eine Darstellung der Tankdaten dargestellt. Diese Darstellung wird vorzugsweise immer dann gezeigt, wenn die Zielführung des Navigationssystems inaktiv ist. Die Darstellung entspricht im wesentlichen der Darstellung gemäß Fig. 2, nur daß verbleibende Fahrtzeit und Entfernung nicht ziel- sondern tankstopbezogen sind. Ein weiterer Unterschied im Vergleich zu Fig. 3 ist, daß in Feld 10 nicht die verbleibende Reichweite, sondern der verbleibende Kraftstoffinhalt dargestellt ist, da die verbleibende Reichweite bereits mittels des pfeilartigen Elementes 5 dargestellt ist.

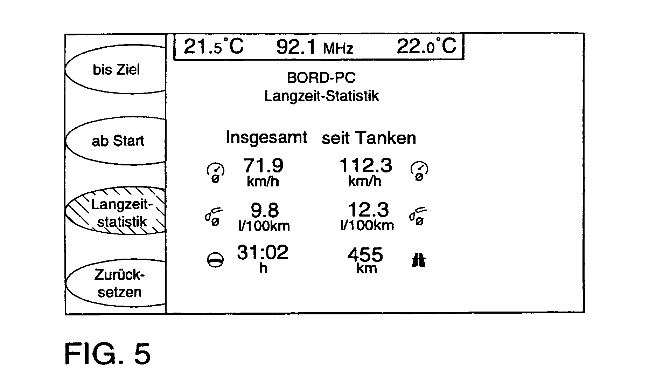

In der Fig. 5 ist eine Langzeitstatistik gezeigt, die durch entsprechende Aufaddierung der Bezugsgrößen gewonnen wird. In einer ersten Spalte sind die Durchschnittsgeschwindigkeit, der mittlere Kraftstoffverbrauch und die Gesamtlenkzeit dargestellt. In einer zweiten Spalte sind diese Betriebsgrößen seit dem letzten Tanken dargestellt, wobei anstelle der Gesamtlenkzeit die Gesamtfahrstrecke dargestellt ist. Zusätzlich kann eine weite Spalte vorgesehen sein, in der die Durchschnittsgeschwindigkeit, der Durchschnittsverbrauch und die zurückgelegte Fahrstrecke zwischen dem vorletzten und dem letzten Tanken dargestellt sind.

## Patentansprüche

1. Verfahren zur Darstellung von fahrtrelevanten Informationen, mittels eines Navigationsgerätes, wobei nach Eingabe eines Zielortes in das Navigationssystem die Gesamtfahrstrecke für die berechnete Route ermittelt wird, diese durch ein grafisches Element (2) bestimmter Länge auf einer Anzeigeeinheit dargestellt wird und an jeweils aktueller Position des Kraftfahrzeuges in Relation zur Gesamtfahrstrecke an dem grafischen Element (2) ein weiteres grafisches Element als Hinweis auf die aktuelle Position angeordnet wird, **dadurch gekennzeichnet dass** das Navigationssystem aus der Durchschnittsgeschwindigkeit und/oder a-priori-Informationen die Gesamtfahrtzeit abschätzt, diese durch ein grafisches Element (1) bestimmter Länge auf der Anzeigeeinheit dargestellt wird und an der jeweils aktuellen Zeit in Relation zu Gesamtzeit an dem grafischen Element (1) ein weiteres grafisches Element alsHinweis auf die aktuelle Zeit angeordnet ist, wobei
das weitere grafische Element für das grafische Element (2) als pfeilartiger Zeiger (5) ausgebildet ist, in dem alphanumerisch die verbleibende oder die bereits zurückgelegte Fahrtstrecke dargestellt ist und
das weitere grafische Element für das grafische Element (1) als pfeilartiger Zeiger (4) ausgebildet ist, in dem alphanumerisch die verbleibende oder zurückgelegte Fahrtzeit dargestellt ist.

2. Verfahren nach Anspruch 1, **dadurch gekennzeichnet, dass** das erste und/oder zweite grafische Element (1,2) als Linie ausgebildet ist.

3. Verfahren nach Anspruch 1 oder 2, **dadurch gekennzeichnet, dass** neben dem grafischen Element (2) vom Startort bis zur aktuellen Position ein balkenförmiges Element (7) angeordnet ist, wenn die bereits zurückgelegte Fahrtstrecke im pfeilartigen Zeiger (5) dargestellt ist oder das balkenförmige Element (7) von der aktuellen Position zum Zielortangeordnet ist, wenn die verbleibende Fahrtstrecke im pfeilartigen Zeiger (5) dargestellt ist.

4. Verfahren nach einem der Ansprüche 1 bis 3, **dadurch gekennzeichnet, dass** neben dem grafischen Element (1) vom Startzeitpunkt bis zur aktuellen Zeit ein balkenförmiges Element (6) angeordnet ist, wenn die bereits zurückgelegte Fahrtzeit im pfeilartigen Zeiger (4) dargestellt ist, oder das balkenförmige Element (6) von der aktuellen Zeit bis zur Ankunftszeit angeordnet ist, wenn die verbleibende Fahrzeit im pfeilartigen Zeiger (4) dargestellt ist.

5. Verfahren nach einem der vorangegangenen Ansprüche, **dadurch gekennzeichnet, dass** in einem Feld (3) die Durchschnittsgeschwindigkeit dargestellt wird.

6. Verfahren nach einem der Ansprüche 1 bis 5, **dadurch gekennzeichnet, dass** die Reichweite des Kraftstoffinhaltes abgeschätzt wird und an dem grafischen Element (1, 2) an der entsprechenden Position markiert wird.

7. Verfahren nach einem der Ansprüche 1 bis 6, **dadurch gekennzeichnet, dass** Verkehrsinformationen erfasst werden und geographisch an der entsprechenden Stelle an dem grafischen Element (1) dargestellt werden.

8. Verfahren nach einem der vorangegangenen Ansprüche, **dadurch gekennzeichnet, dass** zwischen den grafischen Darstellungen und einer rein alphanumerischen Anzeige wahlweise gewechselt werden kann.

9. Verfahren nach einem der vorangegangenen Ansprüche, **dadurch gekennzeichnet, dass** bei inaktiver Zielführung des Navigationssystems die verbleibende Fahrtzeit und Entfernung tankstoppbezogen dargestellt wird.

10. Vorrichtung zur Darstellung von fahrtrelevanten Informationen, umfassend ein Navigationsgerät und eine Anzeigeeinheit, wobei nach Eingabe eines Zielortes in das in das Navigationssystem die Gesamtfahrstrecke für die berechnete Route ermittelt wird, diese durch ein grafisches Element (2) bestimmter Länge auf einer Anzeigeeinheit dargestellt wird und an jeweils aktueller Position des Kraftfahrzeuges in Relation zur Gesamtfahrstrecke an dem grafischen Element (2) ein weiteres grafisches Element als Hinweis auf die aktuelle Position angeordnet wird,
das Navigationssystem aus der Durchschnittsgeschwindigkeit und/oder a-priori-Informationen die Gesamtfahrtzeit abschätzt, diese durch ein grafisches Element (1) bestimmter Länge auf der Anzeigeeinheit dargestellt wird und an der jeweils aktuellen Zeit in Relation zu Gesamtzeit an dem grafischen Element (1) ein weiteres grafisches Element als Hinweis auf die aktuelle Zeit angeordnet ist,
**dadurch gekennzeichnet, dass**
das weitere grafische Element für das grafische Element (2) als pfeilartiger Zeiger (5) ausgebildet ist, in dem alphanumerisch die verbleibende oder die bereits zurückgelegte Fahrtstrecke dargestellt ist und
das weitere grafische Element für das grafische Element (1) als pfeilartiger Zeiger (4) ausgebildet ist, in dem alphanumerisch die verbleibende oder zurückgelegte Fahrtzeit dargestellt ist.

## Claims

1. Method for displaying trip relevant information by means of a navigation device, whereby, following input of the destination location into the navigation system, the total travelling distance is determined for the calculated route, this travelling distance is displayed on a display unit by a graphical element (2) of a specific length, and, in each case at the current position of the motor vehicle in relation to the total travelling distance, a further graphical element is disposed on the graphical element (2) as an indicator of the current position,
**characterized in that**
the navigation system estimates the total travelling time from the average speed and/or a priori information, this travelling time is displayed on the display unit by a graphical element (1) of a specific length and, in each case at the current time in relation to the total time, a further graphical element is disposed on the graphical element (1) as an indicator of the current time,
whereby
the further graphical element for the graphical element (2) is designed as an arrow-type indicator (5), in which the remaining travelling distance or the travelling distance already travelled is displayed alphanumerically, and
the further graphical element for the graphical element (1) is designed as an arrow-type indicator (4), in which the remaining or elapsed travelling time is displayed.

2. Method according to Claim 1, **characterized in that** the first and/or second graphical element (1, 2) is designed as a line.

3. Method according to Claim 1 or 2, **characterized in that**, next to the graphical element (2) a bar-shaped element (7) is disposed from the starting location to the current position, if the travelling distance already travelled is displayed in the arrow-type indicator (5), or the bar-shaped element (7) is disposed from the current position to the destination location if the remaining travelling distance is displayed in the arrow-type indicator (5).

4. Method according to one of Claims 1 to 3, **characterized in that**, next to the graphical element (1), a bar-shaped element (6) is disposed from the starting time to the current time, if the elapsed travelling time is displayed in the arrow-type indicator (4), or the bar-shaped element (6) is disposed from the current time to the arrival time, if the remaining travelling time is displayed in the arrow-type indicator (4).

5. Method according to one of the preceding claims,
**characterized in that** the average speed is displayed in one field (3).

6. Method according to one of Claims 1 to 5,
**characterized in that** the range of the fuel content is estimated and is marked at the corresponding position on the graphical element (1, 2) .

7. Method according to one of Claims 1 to 6,
**characterized in that** traffic information is recorded and displayed geographically at the corresponding position on the graphical element (1).

8. Method according to one of the preceding claims,
**characterized in that** it is possible to switch as required between the graphic displays and a purely alphanumeric display.

9. Method according to one of the preceding claims,
**characterized in that**, if the destination, guidance of the navigation system is inactive, the remaining travelling time and distance are displayed in relation to refuelling stops.

10. Device for displaying trip relevant information, comprising a navigation device and a display unit, whereby, following input of the destination location into the navigation system, the total travelling distance is determined for the calculated route, this travelling distance is displayed on a display unit by a graphical element (2) of a specific length, and, in each case at the current position of the motor vehicle in relation to the total travelling distance, a further graphical element is disposed on the graphical element (2) as an indicator of the current position,
the navigation system estimates the total travelling time from the average speed and/or a priori information, this travelling time is displayed on the display unit by a graphical element (1) of a specific length and, in each case at the current time in relation to the total time, a further graphical element is disposed on the graphical element (1) as an indicator of the current time,
**characterized in that**
the further graphical element for the graphical element (2) is designed as an arrow-type indicator (5), in which the remaining travelling distance or the travelling distance already travelled is displayed alphanumerically, and
the further graphical element for the graphical element (1) is designed as an arrow-type indicator (4), in which the remaining or elapsed travelling time is displayed.

## Revendications

1. Procédé pour représenter des informations importantes pour le déplacement au moyen d'un appareil de navigation, le trajet total pour la route calculée étant déterminé après avoir saisi un lieu de destination dans le système dé navigation, celui-ci étant représenté par un élément graphique (2) de longueur donnée sur une unité d'affichage et un autre élément graphique faisant office d'indication de la position actuelle étant disposé sur l'élément graphique (2) à la position à chaque fois actuelle du véhicule automobile par rapport au trajet total, **caractérisé en ce que** le système de navigation évalue la durée totale du trajet à partir de la vitesse moyenne et/ou des informations approximatives, celle-ci est représentée par un élément graphique (1) de longueur donnée sur l'unité d'affichage et un autre élément graphique faisant office d'indication de la durée actuelle étant disposé sur l'élément graphique (1) à l'endroit du moment à chaque fois actuel par rapport à la durée totale, l'élément graphique supplémentaire pour l'élément graphique (2) étant réalisé sous la forme d'un indicateur (5) de type flèche dans lequel est représenté sous forme alphanumérique le trajet restant ou déjà parcouru et l'élément graphique supplémentaire pour l'élément graphique (1) étant réalisé sous la forme d'un indicateur (4) de type flèche dans lequel est représentée sous forme alphanumérique la durée de déplacement restante ou écoulée.

2. Procédé selon la revendication 1, **caractérisé en ce que** le premier et/ou le deuxième élément graphique (1, 2) est réalisé sous la forme d'une ligne.

3. Procédé selon la revendication 1 ou 2, **caractérisé en ce qu'**en plus de l'élément graphique (2), un élément en forme de barre (7) est disposé entre le point de départ et la position actuelle lorsque le trajet déjà parcouru est représenté dans l'indicateur de type flèche (5) ou l'élément en forme de barre (7) est disposé entre la position actuelle et le point de destination lorsque le trajet restant est représenté dans l'indicateur de type flèche (5).

4. Procédé selon l'une des revendications 1 à 3, **caractérisé en ce qu'**en plus de l'élément graphique (1), un élément en forme de barre (6) est disposé entre le moment de départ et le moment actuel lorsque la durée du trajet déjà parcouru est représentée dans l'indicateur de type flèche (4) ou l'élément en forme de barre (6) est disposé entre le moment actuel et l'heure d'arrivée lorsque la durée du trajet restant est représentée dans l'indicateur de type flèche (4).

5. Procédé selon l'une des revendications précédentes, **caractérisé en ce que** la vitesse moyenne est représentée dans un champ (3).

6. Procédé selon l'une des revendications 1 à 5, **caractérisé en ce que** l'autonomie de la réserve de carburant est estimée et marquée à l'endroit correspondant sur l'élément graphique (1, 2).

7. Procédé selon l'une des revendications 1 à 6, **caractérisé en ce que** des informations de trafic sont acquises et représentées géographiquement à l'endroit correspondant sur l'élément graphique (1).

8. Procédé selon l'une des revendications précédentes, **caractérisé en ce qu'**il est possible de basculer entre les représentations graphiques et un affichage purement alphanumérique.

9. Procédé selon l'une des revendications précédentes, **caractérisé en ce que** lorsque le guidage vers la destination du système de navigation est inactif, la durée de trajet et la distance restantes sont représentées en fonction des arrêts d'avitaillement.

10. Dispositif pour représenter des informations importantes pour le déplacement, comprenant un appareil de navigation et une unité d'affichage, le trajet total pour la route calculée étant déterminé après avoir saisi un lieu de destination dans le système de navigation, celui-ci étant représenté par un élément graphique (2) de longueur donnée sur une unité d'affichage et un autre élément graphique faisant office d'indication de la position actuelle étant disposé sur l'élément graphique (2) à la position à chaque fois actuelle du véhicule automobile par rapport au trajet total, le système de navigation évalue la durée totale du trajet à partir de la vitesse moyenne et/ou des informations approximatives, celle-ci est représentée par un élément graphique (1) de longueur donnée sur l'unité d'affichage et un autre élément graphique faisant office d'indication de la durée actuelle étant disposé sur l'élément graphique (1) à l'endroit du moment à chaque fois actuel par rapport à la durée totale, **caractérisé en ce que** l'élément graphique supplémentaire pour l'élément graphique (2) est réalisé sous la forme d'un indicateur (5) de type flèche dans lequel est représenté sous forme alphanumérique le trajet restant ou déjà parcouru et l'élément graphique supplémentaire pour l'élément graphique (1) est réalisé sous la forme d'un indicateur (4) de type flèche dans lequel est représentée sous forme alphanumérique la durée de déplacement restante
ou écoulée.
